# EUROPEAN PATENT SPECIFICATION

(11) **EP 1 824 930 B1**
(45) Date of publication and mention of the grant of the patent: **11.05.2011**
(21) Application number: 05810881.2
(22) Date of filing: 16.11.2005
(51) Int. Cl.: C08L 23/22, C08L 23/20, C08L 23/06, C08J 5/00

(54) **PEROXIDE VULCANIZABLE BUTYL COMPOSITIONS USEFUL FOR RUBBER ARTICLES**
PEROXIDVULKANISIERBARE BUTYLZUSAMMENSETZUNGEN FÜR KAUTSCHUKARTIKEL
COMPOSITIONS BUTYLIQUES VULCANISABLES AU PEROXYDE UTILISEES DANS DES ARTICLES EN CAOUTCHOUC

(30) Priority: 08.12.2004 US 634367 P
(43) Date of publication of application: 29.08.2007
(73) Proprietor: Lanxess Inc., Sarnia, Ontario N7T 7M2 (CA)
(72) Inventor: GRONOWSKI, Adam, Sarnia, Ontario N7S 3W2 (CA); OSMAN, Akhtar, Sarnia, Ontario N7T 5X7 (CA); CROCKETT, Treena, Petrolia, Ontario N0N 1R0 (CA)
(74) Representative: Deblon, Jörg-Stephan
(86) International application number: PCT/CA2005/001739
(87) International publication number: WO 2006/060896

(56) References cited:
- EP-A- 0 305 190
- WO-A-03/011917
- WO-A-2006/058416
- JP-A- 06 107 738
- JP-A- 06 172 547
- JP-A- 55 062 943
- US-A- 3 584 080

## Description

### FIELD OF THE INVENTION

The present invention is directed to a peroxide curable rubber compound containing a butyl rubber polymer, an olefin polymer of ethylene, at least one α-olefin and optionally at least one diene, and a high vinyl polybutadiene polymer. The present invention is also directed to a peroxide curable rubber compound containing a butyl polymer, an EP(D)M rubber polymer, and a 1,2-polybutadiene polymer.

### BACKGROUND OF THE INVENTION

As is known in the art, peroxide curable rubber compounds offer several advantages over conventional sulfur-curing systems. Typically, these compounds display very fast cure rates and the resulting cured articles tend to possess excellent heat resistance and low compression set. In addition, peroxide-curable formulations are much "cleaner" in that they do not contain any extractable inorganic impurities (e.g. sulfur). Such rubber articles can therefore be used, for example, in condenser caps, biomedical devices, pharmaceutical devices (stoppers in medicine-containing vials, plungers in syringes) and possibly in seals for fuel cells.

The use of butyl-type rubber compounds for sealing applications over other synthetic rubber compounds is preferred because of butyl rubbers non-permeability of gases such as oxygen, nitrogen, and moisture and its stability to acids, alkalis and chemicals.

A commercially available butyl terpolymer based on isobutylene (IB), isoprene (IP) and divinylbenzene (DVB), sold under the tradename Bayer XL-10000 is curable with peroxides alone. However, this material possesses some disadvantages. Since DVB is incorporated during the polymerization process a significant amount of crosslinking occurs during manufacturing. The resulting high Mooney viscosity (ca. 60-75 MU, M_{L}1+8@125 °C) and presence of gel particles can make this material difficult to process. Also, the presence of significant amounts of free DVB can present safety concerns. It would be desirable to have an isobutylene based polymer which is peroxide curable, completely soluble (i.e. gel free) and devoid of harmful or malodorous chemicals in its composition.

It is also well known that compounds containing butyl rubber and polyisobutylene decompose under the action of organic peroxides. Therefore, in these compounds the presence of cure promoters (co-agents) is needed.

One approach to obtaining a peroxide-curable butyl-based formulation lies in the use of conventional butyl rubber in conjunction with a vinyl aromatic compound like DVB and an organic peroxide (see JP-A-107738/1994). In place of DVB, an electron-withdrawing group-containing polyfunctional monomer (ethylene dimethacrylate, trimethylolpropane triacrylate, N,N'-*m*-phenylene dimaleimide) can also be used (see JP-A-172547/1994).

White et al. (U.S. Patent No. 5,578.682) discloses a process for obtaining an uncured polymer with a bimodal molecular weight distribution derived from a polymer that originally possessed a monomodal molecular weight distribution. The polymer, e.g., polyisobutylene, a butyl rubber or a copolymer of isobutylene and para-methylstyrene, was mixed with a polyunsaturated crosslinking agent (and, optionally, a free radical initiator) and subjected to high shearing mixing conditions in the presence of organic peroxide. This bimodalization was a consequence of the coupling of some of the free-radical degraded polymer chains at the unsaturation present in the crosslinking co-agent. White, et al. is silent about the filled compounds of such modified polymers or the cure state of such compounds.

Sudo et. al. (U.S. Patent No. 54,465) discloses a method for curing butyl rubber having an isoprene contents ranging from 0.5 to 2.5 mol %, by treatment with a peroxide and a bismaleimide species. The rubber composition contains optionally an organosilicone compound and the articles thereof are useful for pharmaceutical chemicals or medical treatments. The compositions of Sudo, et al. have excellent molten fluidity after cure.

Co-Pending CA Patent Application 2,458,741 describes the preparation of butyl-based, peroxide curable compounds which employed the use of novel grades of high isoprene butyl rubber. According to this application, N,N'-*m*-phenylenedimaleimide is useful as a cure promoter (co-agent).

Cotsakis et al. (U.S. Patent No. 6,120,869) discloses a pressure sensitive tape for forming water-tight field joints in rubber membranes. This adhesive roofing tape was based on a combination of brominated butyl rubber and EPDM rubber utilizing a peroxide cure system. Both these rubbers can be cured separately with peroxides alone. An important aspect of Costsakis, et al. is to have a high molecular weight polyisobutylene as a plasticizer. The degradation products from the action of peroxide on PIB contributed to surface tack.

For some specific applications, like elastic closures for electrolytic condensers (capacitors) the presence of halogens in the compound is not desirable. This is because the halogens present in the elastic rubber cap (in contact with an electrolyte) can interact with a copper wire of the condenser causing corrosion and subsequently electrolyte leakage. Therefore the above-mentioned applications would not be suitable for condenser caps.

Walker et al. (US 3,584,080) claimed peroxide-vulcanizable compositions containing copolymers of an isoolefin like isobutylene and an aromatic divinyl compound like DVB (or terpolymers IB-IP-DVB) together with a minor amount of a rubbery or resinous polymer (such as PE, NR or EP(D)M rubber) present in a mixed compound. The central aspect of this invention was that the butyl-based polymer contained divinylbenzene in its composition. The claims did not include polybutadiene (BR rubber) as one possible type of rubber co-vulcanized with the butyl-based polymer. Furthermore, Walker, et al. is silent about a three component system based on butyl rubber, EP(D)M rubber and BR rubber present simultaneously in the compound. In addition, Walker, et al. is silent about using high vinyl polybutadiene rubber as one of the ingredients in the prepared compound or article thereof.

Saotome (JP 55-62943 A1) discloses a thermoplastic elastic polymer composition produced by heating and mixing a mixture of butyl-based rubber (IIR or PIB) and an EP(D)M rubber in the presence of an organic peroxide, and partially curing the mixture. The resulting polymer composition has excellent molten fluidity and is intended for hot-melt adhesives and sealants when a tackifier is added to it. The amount of peroxide present in the compound is typically in a range of 0.1 to 1.5 parts per 100 parts of polymer. The examples are based on blends composed of 70 parts of EP(D)M rubber and 30 parts of butyl rubber or PIB. Saotome is specific for compositions having excellent molten processability (and hence the degree of crosslinking has to be limited) and it is silent of the cure state characteristics (e.g., from the MDR test) of the compounds. In fact, the central aspect of Saotome is to suppress the generation of gel which hinders the processability in melt.

Yaeda (JP S50-74643A) disclosed a butyl rubber composition made of butyl rubber and 1,2-polybutadiene with a vinyl bond content of at least 70 %. The sulfur-vulcanized compounds had high hardness and superior tear resistance and compression set. Yaeda does not disclose peroxide curing. In addition, Yaeda did not disclose a tri-component systems with the EP(D)M rubber as one of the components of the mixed or cured compound.

EPDM rubber is known to be used in several applications where butyl rubber is utilized, e.g., cable insulation, shock absorber parts, window seals, roofing membranes and condenser caps. However, EPDM cannot match butyl rubber in impermeability for gases and moisture. For a specific application like a condenser cap, a peroxide cured compound based on butyl and EPDM should be superior to that containing EPDM alone.

Co-pending CA POS-1170 discloses a peroxide curable rubber compound containing a butyl rubber polymer and an olefin polymer of ethylene and at least one α-olefin.

There are several grades of commercial polybutadiene available in the market. They differ in macro- and microstructure which in turns affects their properties as well as the properties of the vulcanizates. Polybutadiene can be cured with peroxides. For example, liquid polybutadiene like Ricon^{®} are used as co-agents or reactive plasticizers and promote crosslinking with free radicals and reduce the viscosity in the mixing/processing stages.

The present invention describes the preparation of butyl-containing, peroxide-curable compounds which employ the use of butyl rubber, EP(D)M rubber and high vinyl polybutadiene rubber present simultaneously in the composition. The butyl elastomer gives predominantly a sealing property and both the EP(D)M rubber and 1,2-polybutadiene act as cure promoters (co-agents) for IIR. With properly chosen amounts of the three elastomers in the compounds, surprisingly good properties of the cured materials are achieved. The EP(D)M serves as the primary co-agent while a minor amount of the 1,2-polybutadiene acts as a secondary but very effective cure promoter. With the use of such a system composed of two polymeric co-agents, the amount of the butyl rubber in the compound can be maximized without a negative effect on the cure state. Since both co-agents are polymeric in nature it minimizes the co-agent leaching, a common problem when utilizing low molecular weight additives.

The MDR and stress-strain characteristics of the vulcanized compounds prepared according to the present invention are comparable to those of a reference compound based on a peroxide-curable butyl rubber, Bayer XL-10000. This demonstrates a significant degree of crosslinking in the final products which are not intended for good processability in the molten state, as in JP 55-62943 A1. The rubber articles based on compounds according to the present invention are useful for sealing applications where a high Shore A hardness, good elongation and low permeability to gases or moisture is important such as for electrolytic condenser caps.

### SUMMARY OF THE INVENTION

The present invention relates to a peroxide curable butyl compound containing a butyl rubber polymer, a polymer of ethylene, at least one α-olefin, and optionally at least one diene, and a high vinyl polybutadiene polymer, wherein the high vinyl polybutadiene Rubben polymer is polybutadiene will at least 70% of vinyl groups in 1,2 microstructure and between 1 to 10 pbr of u peroxide curing agent.

The present invention also relates to a peroxide curable compound containing a butyl rubber polymer, an EP(D)M rubber polymer, and 1,2-polybutadiene wherein the high vinyl polybutadiene Rubber polymer in polybutadiene with at least 70% of vinyl groups in 1,2 micro-structure and between 1 to 10 pbr of a peroxide curing agent.

The present invention also relates to a process for preparing a peroxide curable compound including mixing a butyl rubber polymer, an EP(D)M rubber polymer, 1,2-polybutadiene and at least one peroxide curing agent, wherein the high vinyl polybutadiene Rubber polymer is polybutadiene with at least 70% of vinyl groups in 1,2 microstructure.

The present invention further relates to article containing peroxide curable compounds prepared with a butyl rubber polymer, an EP(D)M rubber polymer, and 1,2-polybutadiene wherein the high vinyl polybutadiene Rubber polymer in polybutadiene with at least 70% of vinyl groups in 1,2 micro-structure and between 1 to 10 pbr of a peroxide curing agent.

### BRIEF DESCRIPTION OF THE DRAWINGS

Figure 1 illustrates the MDR cure curves of compounds prepared according to the present invention and comparative compounds.
Figure 2 illustrates the MDR cure curves of compounds prepared according to the present invention and comparative compounds.

### DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about." Also, all ranges include any combination of the maximum and minimum points disclosed and include any intermediate ranges therein, which may or may not be specifically enumerated herein.

The present invention relates to butyl polymers. The terms "butyl rubber", "butyl polymer" and "butyl rubber polymer" are used throughout this specification interchangeably. Suitable butyl polymers according to the present invention are derived from a monomer mixture containing a C₄ to C₇ monoolefin monomer and a C₄ to C₁₄ multiolefin monomer. Suitable butyl polymers according to the present invention are also essentially gel free (< 10 wt.% gel).

In connection with the present invention the term "gel" is understood to denote a fraction of the polymer insoluble for 60 minutes in cyclohexane boiling under reflux. According to the present invention the gel content is preferably less than 10 wt.%, more preferably less than 5 wt%, most preferably less that 3 wt% and even most preferably less than 1 wt%.

Preferably, the monomer mixture contains from 80% to 99% by weight of a C₄ to C₇ monoolefin monomer and from 1.0% to 20% by weight of a C₄ to C₁₄ multiolefin monomer. More preferably, the monomer mixture contains from 85% to 99% by weight of a C₄ to C₇ monoolefin monomer and from 1.0% to 10% by weight of a C₄ to C₁₄ multiolefin monomer. Most preferably, the monomer mixture contains from 95% to 99% by weight of a C₄ to C₇ monoolefin monomer and from 1.0% to 5.0% by weight of a C₄ to C₁₄ multiolefin monomer.

The preferred C₄ to C₇ monoolefin monomer may be selected from isobutylene, 2-methyl-1-butene, 3-methyl-1-butene, 2-methyl-2-butene, 4-methyl-1-pentene and mixtures thereof. The most preferred C₄ to C₇ monoolefin monomer is isobutylene.

The preferred C₄ to C₁₄ multiolefin monomer may be selected from isoprene, butadiene, 2-methylbutadiene, 2,4-dimethylbutadiene, piperyline, 3-methyl-1,3-pentadiene, 2,4-hexadiene, 2-neopentylbutadiene, 2-methly-1,5-hexadiene, 2,5-dimethly-2,4-hexadiene, 2-methyl-1,4-pentadiene, 2-methyl-1,6-heptadiene, cyclopenta-diene, methylcyclopentadiene, cyclohexadiene, 1-vinyl-cyclohexadiene and mixtures thereof. The most preferred C₄ to C₁₄ multiolefin monomer is isoprene.

The monomer mixture used to prepare suitable butyl rubber polymers for the present invention may contain crosslinking agents, transfer agents and further monomers, provided that the other monomers are copolymerizable with the other monomers in the monomer mixture. Suitable crosslinking agents, transfer agents and monomers include all known to those skilled in the art.

Butyl rubber polymers useful in the present invention can be prepared by any process known in the art and accordingly the process is not restricted to a special process of polymerizing the monomer mixture. Such processes are well known to those skilled in the art and usually include contacting the monomer mixture described above with a catalyst system. The polymerization can be conducted at a temperature conventional in the production of butyl polymers - e.g., in the range of from -100 °C to +50 °C. The polymer may be produced by polymerization in solution or by a slurry polymerization method. Polymerization can be conducted in suspension (the slurry method), see, for example, Ullmann's Encyclopedia of Industrial Chemistry (Fifth, Completely Revised Edition, Volume A23; Editors Elvers et al., 290-292). On an industrial scale, butyl rubber is produced almost exclusively as isobutene/isoprene copolymer by cationic solution polymerization at low-temperatures; cf. for example Kirk-Othmer, Encyclopedia of Chemical Technology, 2nd ed., Vol. 7, page 688, Interscience Publ., New York/London/Sydney, 1965 and Winnacker-Kuchler, Chemische Technologie, 4th Edition, Vol. 6, pages 550-555, Carl Hanser Verlag, Munchen/Wien, 1962. The expression "butyl rubber" can also denote a halogenated butyl rubber.

The present invention relates to peroxide curable compounds containing an olefin polymer of ethylene with at least one α-olefin as one of the needed components in such compounds. Suitable olefin polymers contain monomers of ethylene and at least one α-olefin such as propylene (e.g, EP rubber). The olefin polymer can also contain other alpha-olefin monomers, such as 1-butene, hexene-1, octene-1,4-methylpentene-1, decene-1, dodecene-1, tridecene-1, tetradecene-1, pentadecene-1, hexadecene-1, heptadecene-1, octadecene-1, nonadecene-1 and mixtures thereof and/or diene monomers to form terpolymers or tetrapolymers.

Preferably the olefin polymer according to the present invention is a polymer of ethylene, propylene and at least one additional conjugated diene monomer, for example isoprene and 1,3-butadiene, or an unconjugated diene containing 5 to 25 carbon atoms, for example 1,4-pentadiene, 1,4-hexadiene, 1,5-hexadiene, 2,5-dimethyl-1,5hexadiene and 1,4-octadiene; cyclic dienes, for example cyclopentadiene, cyclohexadiene, cyclooctadiene and dicyclopentadiene; alkylidene and alkenyl norbornenes, for example 5-ethylidene-2-norbornene, 5-butylidene-2-norbornene, 2-methallyl-5-norbornene, 2-isopropenyl-5-norbornene and tricyclodienes. The unconjugated dienes 1,5-hexadiene, ethylidene norbornene and dicyclopentadiene are preferred.

The term "EPDM" or "EPDM rubber polymer" or "EPDM rubber" are used interchangeably through this specification and denotes ethylene/propylene/diene terpolymers. EPDMs include rubbers in which the ratio by weight of ethylene to propylene units is in the range from 40:60 to 65:35 and which may contain from 1 to 20 C=C double bonds/1,000 carbon atoms. Suitable diene monomers in the EPDM include the preferred monomers listed above 5-hexadiene, ethylidene norbornene and dicyclopentadiene. The diene content in the EPDM is preferably 0.5 to 12 % by weight, based on EPDM.

The present invention relates to peroxide curable compounds containing a high vinyl polybutadiene polymer. A high vinyl polybutadiene through this specification contains 70 to 95% vinyl groups pendant to the main polymer chains (1,2-microstructure) and the remaining 30 to 5% are of the cis-trans microstructure along the main chain. Preferably, a high vinyl polybutadiene according to the present invention is 1,2- polybutadiene polymer with a vinyl bond content of at least 70 %. More preferably the vinyl bond content is at least 85 %. Preferably the crystallization degree of a high vinyl polybutadiene according to the present invention is at least 5 %, but in view of ease of mixing, it is preferably 5 to 50 %, and more preferably 5 to 30 %. The molecular weight can be selected from a wide range, from liquid states to solid states, and according to the present invention 1,2- polybutadiene in the solid state is preferred.

Suitable 1,2- polybutadiene useful in the present invention can be manufactured by many known methods including, for example, those disclosed in Japanese Patent Applications S44-32425, S44-32426 and S45-38070. Commercially available 12,-polybutadine polymers are available from Japan Synthetic Rubber Company under the grade JSR RB810. JSR RB810 has more than 90 % of 1,2-bonds and is a thermoplastic elastomer which has an average molecular weight of around 120,000 g/mol and a crystallinity of 15-30 %. Due to this low crystallinity level, this polymer has a suitable melting point and can be easily processed in general-type equipment for processing of polymers.

The compounds of the present invention contain from 50 to 98 parts of butyl polymer per hundred parts rubber, preferably 70 to 93 parts phr, and from 1 to 40 phr of olefin polymer, preferably 5 to 30 phr, and from 1 to 30 phr of 1,2-polybutadierte, preferably 2 to 15 phr.

The compound of the present invention further contains at least one peroxide curing system. The present invention is not limited to a special peroxide curing system. For example, inorganic or organic peroxides are suitable. For example, organic peroxides such as dialkylperoxides, ketalperoxides, aralkylperoxides, peroxide ethers, peroxide esters, such as di-tert.-butylperoxide, bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. Usually the amount of peroxide in the compound is in the range of from 1 to 10 phr (= per hundred rubber), or, for example, from 2 to 8 phr, preferably from 2 to 5 phr. Subsequent curing is usually performed at a temperature in the range of from 100 to 200 °C, for example 130 to 180 °C. Peroxides might be applied advantageously in a polymer-bound form. Suitable systems are commercially available, such as Polydispersion T(VC) D-40 P from Rhein Chemie Rheinau GmbH, D (polymerbound di-tert.-butylperoxy-isopropylbenzene).

The compound of the present invention may further contain other natural or synthetic rubbers such as ABR (butadiene/acrylic acid-C₁-C₄-alkylester-copolymers), CR (polychloroprene), IR (polyisoprene), SBR (styrene/butadiene-copolymers) with styrene contents in the range of 1 to 60 wt%, NBR (butadiene/acrylonitrile-copolymers with acrylonitrile contents of 5 to 60 wt%, HNBR (partially or totally hydrogenated NBR-rubber), FKM (fluoropolymers or fluororubbers), and mixtures of the given polymers.

The compound may further contain at least one active or inactive filler. Suitable fillers include:
- highly dispersed silicas, prepared e.g., by the precipitation of silicate solutions or the flame hydrolysis of silicon halides, with specific surface areas of in the range of from 5 to 1000 m²/g, and with primary particle sizes of in the range of from 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas in the range of from 20 to 400 m²/g and primary particle diameters in the range of from 10 to 400 nm;
- natural silicates, such as kaolin and other naturally occurring silica;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on butadiene/styrene copolymers, butadiene/acrylonitrile copolymers and polychloroprene; or mixtures thereof.

Examples of suitable mineral fillers include silica, silicates, clay such as bentonite, gypsum, alumina, titanium dioxide, talc, mixtures of these. These mineral particles have hydroxyl groups on their surface, rendering them hydrophilic and oleophobic. This exacerbates the difficulty of achieving good interaction between the filler particles and the tetrapolymer. For many purposes, the preferred mineral is silica, or for example, silica made by carbon dioxide precipitation of sodium silicate. Dried amorphous silica particles suitable for use in accordance with the present invention may have a mean agglomerate particle size in the range of from 1 to 100 microns, or, for example, between 10 and 50 microns or, between 10 and 25 microns. It is preferred that less than 10 percent by volume of the agglomerate particles are below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trade names HiSil® 210, HiSil® 233 and HiSil® 243 from PPG Industries Inc. Also suitable are Vulkasil S and Vulkasil N, from Bayer AG.

It might be advantageous to use a combination of carbon black and mineral filler in the present inventive compound. In this combination the ratio of mineral fillers to carbon black is usually in the range of from 0.05 to 20, or, for example, 0.1 to 10. For the rubber composition of the present invention it is usually advantageous to contain carbon black in an amount of in the range of from 20 to 200 parts by weight, for example 30 to 150 parts by weight, or, for example, 40 to 100 parts by weight.

The rubber compound according to the present invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, which are known to the rubber industry. The rubber aids are used in conventional amounts, which depend inter alia on the intended use. Conventional amounts are e.g. from 0.1 to 50 wt.%, based on rubber. For example, the compound furthermore may contain in the range of 0.1 to 20 phr of an organic fatty acid, such as a unsaturated fatty acid having one, two or more carbon double bonds in the molecule which more preferably includes 10% by weight or more of a conjugated diene acid having at least one conjugated carbon-carbon double bond in its molecule. For example, those fatty acids have in the range of from 8-22 carbon atoms, or for example, 12-18. Examples include stearic acid, palmitic acid and oleic acid and their calcium-, zinc-, magnesium-, potassium- and ammonium salts.

The ingredients of the final compound can be mixed together in any known manner, suitably at an elevated temperature that may range from 25 °C to 200 °C. Normally the mixing time does not exceed one hour and a time in the range from 2 to 30 minutes is usually adequate. The mixing is suitably carried out in a suitable mixing means such as an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted pre-crosslinking (= scorch) occurs during the mixing stage. For compounding and vulcanization see also, Encyclopedia of Polymer Science and Engineering, Vol. 4, p. 66 et seq. (Compounding) and Vol. 17, p. 666 et seq. (Vulcanization).

Furthermore, the present invention provides shaped articles containing the inventive peroxide-curable compound, which would then be vulcanized by heating it over the decomposition temperature of the peroxide and/or radiation. Articles prepared with compounds according to the present invention have the preferred properties of EPDM like very good resistance to ozone, weathering, heat, oxidation and good chemical resistance and have the impermeability to gasses and moisture of butyl rubber therefore making compounds according to the present invention suitable for applications such as containers for pharmaceuticals, in particular stopper and seals for glass or plastic vials, tubes, parts of syringes and bags for medical and non-medical applications, condenser caps and seals for fuel cells, parts of electronic equipment, in particular insulating parts, seals and parts of containers containing electrolytes, rings, dampening devices, ordinary seals, and sealants.

### EXAMPLES

The compounds presented in the examples included the following components: butyl rubber (Bayer XL-10,000, Bayer RB 301, Bayer RB 402, XIIR (experimental polymer disclosed below)), EP(D)M rubber (Buna EP T 3950), 1,2-polybutadiene rubber (JSR RB810), carbon black (IRB #7) and a peroxide curing agent (DI-CUP 40C, Struktol Canada Ltd.).

Mixing of the rubber compounds was accomplished with the use of a miniature internal mixer (Brabender MIM) from C. W. Brabender, consisting of a drive unit (Plasticorder^{®} Type PL-V151) and a data interface module.

Cure characteristics were determined with a Moving Die Rheometer (MDR) test carried out according to ASTM standard D-5289 on a Monsanto MDR 200 (E). The upper disc oscillated though a small arc of 1 degree.

Curing was achieved with the use of an Electric Press equipped with an Allan-Bradley Programmable Controller.

Stress-strain tests were carried out using an Instron Testmaster Automation System, Model 4464 according to ASTM standard D412, Method A.

Tear properties of the compounds were determined according to Die C Tear test as specified in the norm ASTM D 624.

The test procedure for compression set of vulcanized rubber specimens complied with ASTM D 395 (Method B) with the following exceptions:
a) the thickness of the spacers required have been adjusted to obtain closer deflection tolerances of 25 ± 1.5% versus a tolerance of 25 ± 4 % for the ASTM procedure (under its specified thickness range and spacer requirements),
b) specimens with a thickness outside of the ASTM range defined (1.20 to 1.30 cm) were tested under the conditions of (a) above,
c) the surfaces of the plates used to compress the specimens were not chrome plated as ASTM D 395 prescribed.

The compounds studied were composed of:

| | |
|---|---|
| Polymer(s): | 100 phr |
| Carbon black (IRB #7; N330): | 50 phr |
| Peroxide (DI-CUP 40 C): | 1-5 phr |

In Examples 1 and 2, mixing was achieved with the use of a Brabender internal mixer (capacity ca. 75 g) with a starting temperature of 60 °C and a mixing speed of 50 rpm according to the following sequence:

| | |
|---|---|
| 0.0 min: | polymer(s) added |
| 1.5 min: | carbon black added, in increments |
| 7.0 min: | peroxide added |
| 8.0 min: | mix removed |

The final compound was refined on a 6" x 12" mill.

In Examples 3 and 4, mixing was achieved using a 6" x 12" 2-roll mill (Farrel, capacity 1000 g). The roll temperature was at 75 °C (Mokon set at 75 °C). The mixing was performed according to the following sequence:

| | |
|---|---|
| 0.0 min: | polymers added, ¾ cuts |
| 1.5 min: | carbon black added, % cuts |
| 6.0 min; | peroxide added, 3/4 cuts |
| 8.0 min; | mix removed |

The final compound was refined (6 passes on a 6" x 12" mill).

### Example 1 - Comparative

The compound of Example 1 was based on commercial pre-crosslinked butyl rubber (Bayer XL-1 0000) mixed in a Brabender mixer. The amount of peroxide used was 1 phr.

The cured compound gave the following test results: delta torque = 13.9 dN·m, Shore A hardness = 55 points, ultimate tensile = 4.89 MPa, and ultimate elongation = 136 %. The value from the Die C Tear test was 15.67 kN/m and the compression set was 9.22 %.

### Example 2 - Inventive

The compound of Example 2 was based on commercial polymers: 170 g of butyl rubber (Bayer RB 402), 30 g of EPDM rubber (Buna EP T 3950) and 15 g of JSR RB810. All three elastomers were pre-blended together on a mill for 30 min at ca. 80 °C. Subsequently, this rubber blend was introduced into the Brabender internal mixer and compounded with carbon black and 3 phr of peroxide.

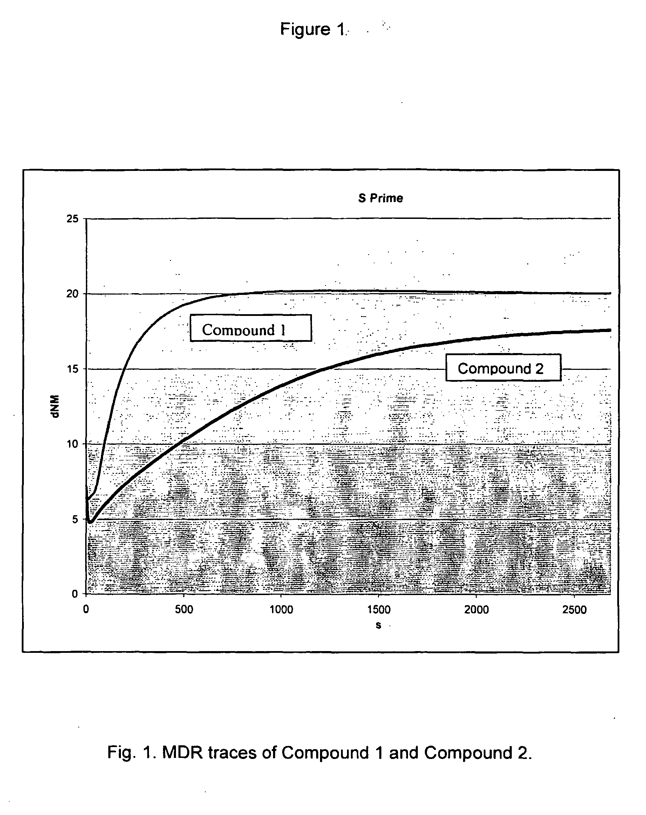

The cured compound gave the following test results: delta torque = 12.8 dN·m, Shore A hardness = 66 points, ultimate tensile = 4.41 MPa, and ultimate elongation = 140 %. The result from the Die C Tear test was 23.54 kN/m and the compression set was 21.26 %. The results for the Examples 1 and 2 are summarized in Table 1 and the MDR traces of the compounds are given in Figure 1.

**Table 1- Properties of Compounds 1 & 2**

| Property | | |
|---|---|---|
| | Example 1 (XL-10000) | Example 2 IIR + EPDM + BR |
| Hardness, Shore A2 (pts.) | 55 | 66 |
| Ultimate Elongation (%) | 136 | 140 |
| Ultimate Tensile (MPa) | 4.89 | 4.41 |
| Stress @ 100 (MPa) | 3.94 | 3.93 |
| Δ Torque (dNm) | 13.9 | 12.8 |
| Die C Tear (kN/m) | 15.7 | 23.5 |
| Compression Set (%) | 9.22 | 21.26 |

For a condenser cap application, a cured compound should possess a high hardness, a relatively high elongation, good tear strength and a low compression set. The inventive compound had higher Shore A hardness and tear resistance than the reference compound containing XL-10000, while, its compression set was higher, the obtained value of the compression set is comparable to a resin cured butyl rubber where also carbon-carbon covalent bonds are formed. The elongation and tensile properties for Compounds 1 & 2 were very similar, as well as delta torque values from the MDR test.

### Example 3 - Comparative

The compound of Example 3 was based on commercial pre-crosslinked butyl rubber (Bayer XL-10000) mixed on a 6" x 12" mill. The compound was composed of 100 parts of rubber, 50 phr of carbon black and 2 phr of peroxide.

The cured compound gave the following test results: compound Mooney viscosity (M_{L} 1'+4+@100 °C) = 108.5 units, delta torque = 13.9 dN·m, Shore A hardness = 50 points, ultimate tensile = 9.34 MPa, and ultimate elongation = 171 %. The result from the Die C Tear test was 16.90 kN/m and the compression set was 11.49 %.

### Example 4 - Inventive

The compound of Example 4 was based on experimental high isoprene butyl rubber (XIIR). The method of manufacturing of such IIR possessing an isoprene content of up to 8.0 mol % and Mooney viscosity (ML 1+8 @ 125 °C) between 35 and 40 MU in a continuous process is described below.

The monomer feed composition was comprised of 4.40 wt. % of isoprene (IP or IC5) and 25.7 wt. % of isobutene (IP or IC4). This mixed feed was introduced into the continuous polymerization reactor at a rate of 5900 kg/hour. In addition, DVB was introduced into the reactor at a rate of 5.4 to 6 kg/hour. Polymerization was initiated via the introduction of an AlCl₃/MeCl solution (0.23 wt. % of AlCl₃ in MeCl) at a rate of 204 to 227 kg/hour. The internal temperature of the continuous reaction was maintained between -95 and -100 °C through the use of an evaporative cooling process. Following sufficient residence within the reactor, the newly formed polymer crumb was separated from the MeCl diluent with the use of an aqueous flash tank. At this point, ca. 1 wt. % of stearic acid was introduced into the polymer crumb. Prior to drying, 0.1 wt. % of Irganox® 1010 was added to the polymer. Drying of the resulting material was accomplished with the use of a conveyor oven.

The content of isoprene in the obtained polymer was 7.5 mol %.

It is important to note that although the experimental high IP IIR elastomer described above contained trace amounts of DVB, (ca. 0.07 - 0.11 mol %) this level is less than 10 % of that found in commercial XL-10000 (ca. 1.2 - 1.3 mol%).

The compound was composed of 85 parts of XIIR, 10 parts of EPDM, 5 parts of JSR RB810 and 5 phr of peroxide and mixed on a 6" x 12" inch mill.

The cured compound gave the following test results: compound Mooney viscosity (M_{L} 1'+4+@100 °C) = 76.6 units, delta torque = 16.2 dN·m, Shore A hardness = 67 points, ultimate tensile = 7.21 MPa, and ultimate elongation = 243 %. The result from the Die C Tear test was 24.44 kN/m and the compression set was 16.35 %.

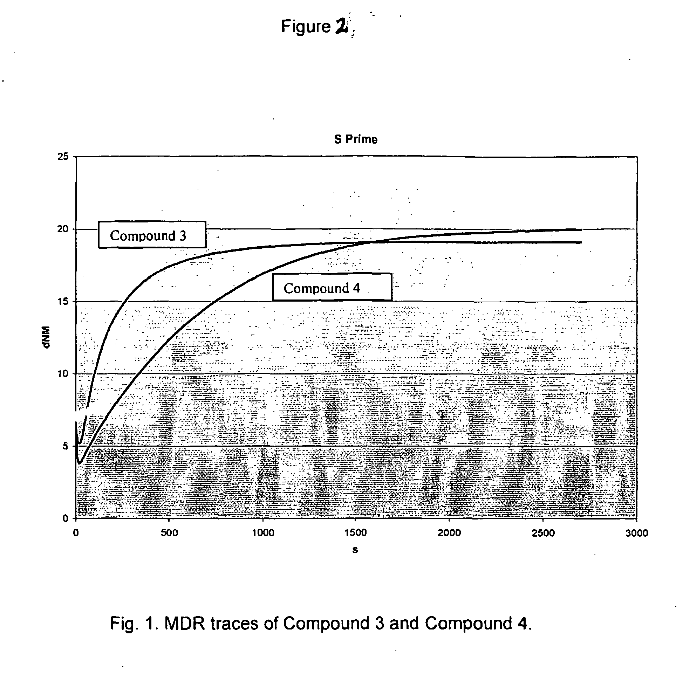

The results for the Examples 3 and 4 are summarized in Table 2 and the MDR traces of the compounds are given in Figure 2.

**Table 2- Properties of Compounds 3 & 4.**

| Property | | |
|---|---|---|
| | Example 3 XL-10000 | Example 4 XIIR + EPDM + BR |
| Compound MV (M_{L} 1'+ 4'@100°C), units | 108.5 | 76.6 |
| Hardness, Shore A2 (pts.) | 50 | 67 |
| Ultimate Elongation (%) | 171 | 243 |
| Ultimate Tensile (MPa) | 9.34 | 7.21 |
| Δ Torque (dNm) | 13.9 | 16.2 |
| Die C Tear (kN/m) | 16.90 | 24.44 |
| Compression Set (%) | 11.49 | 16.35 |

The inventive compound had a considerably lower Mooney viscosity than a reference compound, which should be beneficial for processability. Also, there were improvements in Shore A hardness, the ultimate elongation and tear properties.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A rubber compound comprising
• a butyl rubber polymer,
• a high vinyl polybutadiene rubber polymer, wherein the high vinyl polybutadiene rubber polymer is polybutadiene with at least 70 % of vinyl groups in 1,2-microstructure
• an olefin polymer of ethylene, at least one α-olefin and optionally, at least one diene and
• between 1 to 10 phr of a peroxide curing agent,

2. A rubber compound according to Claim 1, wherein the olefin polymer of ethylene is EP(D)M rubber.

3. A rubber compound according to Claim 1, wherein the peroxide curing agent is selected from the group consisting of dialkylperoxides, ketalperoxides, aralkylperoxides, peroxide ethers, peroxide esters.

4. A rubber compound according to Claim 3, wherein the peroxide curing agent is selected from the group consisting of di-tert.-butylperoxide, bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide, tert.-butylperbenzoate and mixtures thereof.

5. A rubber compound according to Claim 1 further comprising at least one filler.

6. A rubber compound according to Claim 1, wherein the filler is carbon black.

7. A process for preparing a peroxide curable rubber compound comprising mixing
• a butyl rubber polymer,
• a high vinyl polybutadiene rubber polymer, wherein the high vinyl polybutadiene rubber polymer is polybutadiene with at least 70 % of vinyl groups in 1,2-microstructure
• a polymer of ethylene, at least one α-olefin and optionally, at least one diene
in the presence of a peroxide curing agent.

8. A shaped article comprising the compound according to Claim 1.

9. A shaped article according to Claim 8, wherein the shaped article is a container for pharmaceuticals, a condenser cap, a seal for fuel cells, a container containing electrolytes, rings, dampening devices, ordinary seals, and sealants.

## Patentansprüche

1. Kautschukmasse, enthaltend
• ein Butylkautschukpolymer,
• ein Polybutadienkautschukpolymer mit hohem Vinylgehalt, wobei es sich bei dem Polybutadienkautschukpolymer mit hohem Vinylgehalt um Polybutadien mit mindestens 70% Vinylgruppen in 1,2-Mikrostruktur handelt,
• ein Olefinpolymer von Ethylen, mindestens einem α-Olefin und gegebenenfalls mindestens einem Dien und
• 1 bis 10 phr eines Peroxid-Härters.

2. Kautschukmasse nach Anspruch 1, wobei es sich bei dem Olefinpolymer um EP(D)M-Kautschuk handelt.

3. Kautschukmasse nach Anspruch 1, wobei der Peroxid-Härter aus der Gruppe bestehend aus Dialkylperoxiden, Ketalperoxiden, Aralkylperoxiden, Peroxidethern und Peroxidestern ausgewählt ist.

4. Kautschukmasse nach Anspruch 3, wobei der Peroxid-Härter aus der Gruppe bestehend aus Di-tert.-butylperoxid, Bis(tert.-butylperoxyisopropyl)-benzol, Dicumylperoxid, 2,5-Dimethyl-2,5-di(tert.-butylperoxy)hexan, 2,5-Dimethyl-2,5-di(tert.-butylperoxy)hexen-(3), 1,1-Bis(tert.-butylperoxy)-3,3,5-trimethylcyclohexan, Benzoylperoxid, tert.-Butylcumylperoxid, tert.-Butylperbenzoat und Mischungen davon ausgewählt ist.

5. Kautschukmasse nach Anspruch 1, die ferner mindestens einen Füllstoff enthält.

6. Kautschukmasse nach Anspruch 1, wobei es sich bei dem Füllstoff um Ruß handelt.

7. Verfahren zur Herstellung einer peroxidhärtbaren Kautschukmasse, bei dem man
• ein Butylkautschukpolymer,
• ein Polybutadienkautschukpolymer mit hohem Vinylgehalt, wobei es sich bei dem Polybutadienkautschukpolymer mit hohem Vinylgehalt um Polybutadien mit mindestens 70% Vinylgruppen in 1,2-Mikrostruktur handelt,
• ein Olefinpolymer von Ethylen, mindestens einem α-Olefin und gegebenenfalls mindestens einem Dien
in Gegenwart eines Peroxid-Härters mischt.

8. Formkörper, umfassend die Masse nach Anspruch 1.

9. Formkörper nach Anspruch 8, bei dem es sich um einen Behälter für Pharmazeutika, einen Kondensatordeckel, eine Dichtung für Brennstoffzellen, einen Elektrolyte enthaltenden Behälter, Ringe, Dämpfungsvorrichtungen, gewöhnliche Dichtungen und Dichtungsmassen handelt.

## Revendications

1. Mélange de caoutchouc comprenant
- un polymère butylcaoutchouc,
- un polymère caoutchouc polybutadiène à haute teneur en vinyle, le polymère caoutchouc polybutadiène à haute teneur en vinyle étant un polybutadiène comprenant au moins 70 % de groupes vinyles en microstructure 1,2,
- un polymère oléfinique de l'éthylène, d'au moins une α-oléfine et éventuellement d'au moins un diène et
- entre 1 et 10 pcc d'un agent de vulcanisation peroxyde.

2. Mélange de caoutchouc selon la revendication 1, dans lequel le polymère oléfinique de l'éthylène est un caoutchouc EP(D)M.

3. Mélange de caoutchouc selon la revendication 1, dans lequel l'agent de vulcanisation peroxyde est choisi dans le groupe constitué par les peroxydes de dialkyle, les peroxydes de cétal, les peroxydes d'aralkyle, les éthers de peroxyde, les esters de peroxyde.

4. Mélange de caoutchouc selon la revendication 3, dans lequel l'agent de vulcanisation peroxyde est choisi dans le groupe constitué par le peroxyde de dit-butyle, le bis(*tert*-butylperoxyisopropyl)benzène, le peroxyde de dicumyle, le 2,5-diméthyl-2,5-di(*tert-*butylperoxy)hexane, le 2,5-diméthyl-2,5-di(*tert-*butylperoxy)hex-3-ène, le 1,1-bis(*tert*-butylperoxy)-3,3,5-triméthylcyclohexane, le peroxyde de benzoyle, le peroxyde de *tert*-butyle et de cumyle, le perbenzoate de *tert*-butyle et les mélanges de ceux-ci.

5. Mélange de caoutchouc selon la revendication 1 comprenant en outre au moins une charge.

6. Mélange de caoutchouc selon la revendication 1, dans lequel la charge est le noir de carbone.

7. Procédé pour la préparation d'un mélange de caoutchouc vulcanisable par peroxyde comprenant le mélange
- d'un polymère butylcaoutchouc,
- d'un polymère caoutchouc polybutadiène à haute teneur en vinyle, le polymère caoutchouc polybutadiène à haute teneur en vinyle étant un polybutadiène comprenant au moins 70 % de groupes vinyles en microstructure 1,2,
- d'un polymère de l'éthylène, d'au moins une α-oléfine et éventuellement d'au moins un diène
en présence d'un agent de vulcanisation peroxyde.

8. Article formé comprenant le mélange selon la revendication 1.

9. Article formé selon la revendication 8, l'article formé étant un récipient pour produits pharmaceutiques, un capot de condensateur, un joint d'étanchéité pour piles à combustible, un récipient contenant des électrolytes, des bagues, des dispositifs amortisseurs, des joints ordinaires et des produits d'étanchéité.
